# EUROPÄISCHE PATENTSCHRIFT

(11) **EP 4 396 481 B1**
(45) Veröffentlichungstag und Bekanntmachung des Hinweises auf die Patenterteilung: **19.03.2025**
(21) Anmeldenummer: 22786884.1
(22) Anmeldetag: 26.08.2022
(51) Int. Cl.: F16K 27/00, F16J 15/18, F16K 37/00, F16K 41/02

(54) **STELLVENTILEINHEIT**
CONTROL VALVE UNIT
UNITÉ DE SOUPAPE DE COMMANDE

(30) Priorität: 01.09.2021 DE 202021104689 U
(43) Veröffentlichungstag der Anmeldung: 10.07.2024
(73) Patentinhaber: Samson Aktiengesellschaft, 60314 Frankfurt (DE)
(72) Erfinder: KOLBENSCHLAG, Stefan, 64291 Darmstadt (DE)
(74) Vertreter: Puschmann Borchert Kaiser Klettner Patentanwälte Partnerschaft mbB
(86) Internationale Anmeldenummer: PCT/EP2022/073832
(87) Internationale Veröffentlichungsnummer: WO 2023/031055

(56) Entgegenhaltungen:
- US-A- 3 968 970
- US-A- 5 290 010

## Beschreibung

Die Erfindung betrifft eine Stellventileinheit gemäß dem Oberbegriff des Anspruches 1.

Eine Stellventileinheit umfasst eine Ventilstange, die mittels einer Dichtanordnung gegenüber einem Ventilgehäuse abgedichtet ist. Die Dichtanordnung umfasst ein Dichtelement in der Art einer Stopfbuchse, die ein verformbares Packungsmaterial - auch Packung genannt - und eine das Dichtelement axial zusammenpressende Druckhülse enthält, auf die insbesondere über ein Federelement eine Anpresskraft ausgeübt ist. In Abhängigkeit der Betriebsbedingungen, z.B. hohe Temperaturen, hoher Druck und/oder aggressive Medien, kann die Packung aus unterschiedlichen Komponenten und/oder Werkstoffen, beispielsweise Aramid, Graphit, PTFE usw. unter Beigabe von diversen Schmier- und Imprägniermitteln hergestellt sein. Es stehen eine Vielzahl von Materialen zur Verfügung, die unterschiedliche Setzungseigenschaften aufweisen. Durch die axiale Pressung entsteht auch eine radiale Pressung des Dichtelements auf die Ventilstange und auf das Ventilgehäuse. Diese Art Dichtanordnungen haben jedoch den Nachteil, dass sie im laufenden Betrieb Verschleiß und Setzungseigenschaften ausgesetzt sind und mit der Zeit undicht werden, wenn die Anpresskraft der Packung nachlässt. Ein automatisches axiales Nachspannen der Packung kann mittels eines vorgespannten Federelements erfolgen.

Es ist wünschenswert ein frühzeitiges Nachlassen der Dichtigkeit der Dichtanordnung zu erkennen. So ist aus der US 5 549 305 A beispielsweise ein Rußbläser bekannt, der ein Zuführungsrohr zur Abgabe von Flüssigkeit an ein konzentrisch montiertes Lanzenrohr umfasst, wobei eine Dichtanordnung das Austreten der Flüssigkeit aus dem System verhindert. Die Dichtanordnung weist eine Packung zwischen der Innenfläche des Lanzenrohrs und der Außenfläche des Zuführungsrohrs auf. Um eine abdichtende Wirkung der Packung bei Verschleiß aufrecht zu erhalten, ist eine in Eingriff mit der Packung stehende Druckhülse durch eine Vielzahl von Schraubenfedern vorgespannt. Die Federn sind zwischen einem festen und einem beweglichen Anschlag einer Vorspanneinrichtung vorgespannt, die mit der Druckhülse verbunden ist. Eine gewünschte Anpresskraft auf die Packung ist über die Anzahl der Federn einstellbar. In einer Ausführungsform kann eine Längung der Federn, die aufgrund der sich reduzierenden Vorspannkraft erfolgt, welche wiederum auf den Verschleiß der Packung zurückzuführen ist, mittels eines Bolzens erfasst werden, der in den beweglichen Anschlag eingeschraubt ist und sich durch eine am festen Anschlag befestigte Hülse erstreckt. Die Längung der Federn vergrößert den Abstand zwischen dem festen Anschlag und dem beweglichen Anschlag, wodurch ein Kopf des Bolzens in die Hülse gezogen wird, bis er verschwindet. Dies ist ein Hinweis oder Signal, dass die Federn nachgespannt werden müssen.

In der DE 10 2006 022 212 A1 ist eine Federanordnung einer Dichtanordnung beschrieben, die beispielsweise einen Ventilschaft gegenüber einem Ventilkörper abdichtet. Eine Packung der Dichtanordnung wird mittels einer Druckhülse komprimiert, die von einem Druckelement in der Form eines Komprimierungsflansches beaufschlagt wird, wobei das Druckelement mit der Federanordnung zusammenarbeitet. Die Federanordnung ist über ein im Ventilkörper verankertes Anschlusselement mit dem Komprimierungsflansch verbunden. Das als Gewindebolzen ausgeführte Anschlusselement durchgreift die Federanordnung und den Komprimierungsflansch. Mit Hilfe einer Gewindemutter, die unter Zwischenlage der Federanordnung mit dem Gewindebolzen verschraubt ist, kann die Druckbeaufschlagung auf die Druckhülse und folglich die Packung variiert werden. Die Federanordnung weist ein über die Gewindemutter komprimierbares Federelement für die notwendige Vorspannung auf, wobei das Federelement in einem Gehäuse aufgenommen und durch einen Verschlussdeckel in dem Gehäuse gehalten ist. Der Verschlussdeckel und das Gehäuse können eine gegenseitige Relativbewegung in Axialrichtung bei gleichzeitiger Kompression/Entspannung des Federelements vollführen.

In der US 2015 0369 388 A1 ist eine Ventilkonfigurationen beschrieben, die eine Dichtanordnung aufweist, deren Packung über eine Druckhülse komprimiert wird, die ein Druckelement in der Form eines Komprimierungsflansches aufweist. Der Komprimierungsflansch ist über Anschlusselemente bzw. Bolzen mit einem Ventilgehäuse verbunden. Durch Anziehen der mit den jeweiligen Bolzen verschraubten Schraubenmuttern kann die Druckbeaufschlagung auf die Packung erhöht werden, wobei ein Federelement jeweils zwischen der Schraubenmutter und dem Bolzen angeordnet ist.

Die EP 2 753 908 B1 beschreibt eine Stellventileinheit mit einer Dichtanordnung, bei der die Kompression auf eine Packung durch die Verwendung länglicher Bolzen erfolgt, die an einem Ende mit einem Ventilgehäuse und am jeweils anderen Ende mit einem Komprimierungsflansch verbunden sind.

Der Komprimierungsflansch stützt sich auf einer Druckhülse der Dichtanordnung ab. Das Anziehen von mit den Bolzen verschraubten Schraubenmuttern erhöht den Druck auf die Packung. Zwischen den Schraubenmuttern und einer Außenfläche des Flansches ist ein Federelement angeordnet, die Änderungen der Packung kompensiert, um den erforderlichen Druck und die Abdichtung zum Ventilschaft aufrecht zu erhalten.

Die DE 10 2014 015 888 A1 beschreibt eine Stellventileinheit, welche die gattungsbildenden Merkmale aufweist. Die Stellventileinheit umfasst eine Ventilstange, die über eine Dichtanordnung gegenüber einem Ventilgehäuse abgedichtet ist. Die Dichtanordnung weist eine komprimierbare Packung auf, die axial zwischen einem Gegenlager am Ventilgehäuse und einer Druckhülse aufgenommen ist. Die Druckhülse ist relativ zum Ventilgehäuse axial beweglich gelagert. Ein Federelement überträgt über die Druckhülse eine Anpresskraft auf die Packung. Das Federelement stützt sich gegen eine Vorspanneinrichtung ab, welche im Abstand zum Gegenlager einstellbar ist. Dadurch ist die auf die Druckhülse wirkende Anpresskraft des Federelements einstellbar. Über eine Messeinrichtung ist eine Lageveränderung der Druckhülse relativ zum Gegenlager detektierbar.

Diese Art Dichtanordnungen sind im laufenden Betrieb Verschleiß und Setzungseigenschaften ausgesetzt. Dadurch lassen die axiale Pressung und die damit verbundenen radialen Dichtkräfte auf die Ventilstange und das Ventilgehäuse mit der Zeit nach und es besteht die Gefahr, dass Prozessfluid aus dem Ventilgehäuse entweicht. Bei Verschleiß und Setzungen der Packung kann ein automatisches axiales Nachspannen der Packung über das auf die Druckhülse wirkende vorgespannte Federelement erfolgen. Die Kräfte des Federelements nehmen mit zunehmender Längung entsprechend der Federkennlinie ab.

Eine gattungsgemäße, die Merkmale des Oberbegriffes des Anspruches 1 aufweisende Stellventileinheit ist in der US 3 968 970 A offenbart.

Es ist Aufgabe der Erfindung, eine Stellventileinheit der im Anspruch 1 angegebenen Art derart weiterzubilden, dass eine gegenüber dem Stand der Technik verbesserte Einstellbarkeit einer Dichtigkeit einer Dichtanordnung unterschiedlicher Packungen ermöglicht ist.

Die Aufgabe wird durch die kennzeichnenden Merkmale des Anspruchs 1 in Verbindung mit seinen Oberbegriffsmerkmalen gelöst.

Die Unteransprüche bilden eine vorteilhafte Weiterentwicklung der Erfindung.

In bekannter Art und Weise umfasst eine Stellventileinheit eine Dichtanordnung, die eine Ventilstange gegenüber einem Ventilgehäuse abdichtet. Die Dichtanordnung weist eine Stopfbuchse auf, in der eine axial komprimierbare Packung zwischen einem Gegenlager am Ventilgehäuse und einer axial beweglich zum Ventilgehäuse gelagerten Druckhülse aufgenommen ist. Auf die Druckhülse wird von wenigstens einem Federelement, das sich über ein Ende an einer Vorspanneinrichtung und über das jeweils andere Ende an der Druckhülse abstützt, eine Anpresskraft ausgeübt. Dabei stützt sich das Federelement über ein Druckelement, beispielsweise eine ringförmige Schulter, auf der Druckhülse ab. Die Vorspanneinrichtung ist im Abstand zum Gegenlager einstellbar, beispielsweise mittels Einstellschrauben, wodurch eine entsprechende Anpresskraft des Federelements einstellbar ist. Bei Nachlassen der Dichtigkeit der Packung wird die Druckhülse mittels Anpresskraft des Federelements axial in Richtung Gegenlager bewegt, wobei aufgrund dieser Relativbewegung auf einen entsprechenden Verschleiß der Packung geschlossen werden kann.

Das Ventilgehäuse kann beispielsweise einteilig ausgebildet sein, so dass die Aufnahme der Packung, fluidische Anschlüsse und ein Ventilsitz in dem einteiligen Ventilgehäuse untergebracht sind. Es ist ebenfalls möglich, dass das Ventilgehäuse ein Grundgehäuse, in dem sich der Ventilsitz und die fluidischen Anschlüsse befinden, sowie einen Ventildeckel, der zur Aufnahme der Packung mit der Ventilstange dient, umfasst. Der Ventildeckel und das Grundgehäuse sind dann dichtend verbunden. Die Stellventileinheit und die fluidischen Anschlüsse können für Gase oder Flüssigkeiten ausgelegt sein.

Erfindungsgemäß ist das Federelement axial zwischen einem ersten Anschlag und einem zweiten Anschlag der Vorspanneinrichtung angeordnet, wobei in einem vormontierten Zustand der Vorspanneinrichtung das Federelement sich unter Vorspannung am ersten Anschlag sowie am zweiten Anschlag abstützt, wobei in einem Betriebszustand der Stellventileinheit der zweite Anschlag in Richtung Gegenlager fest beabstandet zum ersten Anschlag angeordnet ist und wobei die axiale Lageveränderung der Druckhülse durch den in Richtung Gegenlager beabstandet zum Druckelement angeordneten zweiten Anschlag begrenzt ist. Das sich in Axialrichtung erstreckende Federelement, beispielsweise ein Tellerfederpaket oder eine Schraubenfeder, ist im vormontierten Zustand der Vorspanneinrichtung zwischen dem ersten Anschlag und dem zweiten Anschlag axial eingespannt und übt dabei weder auf die Druckhülse noch auf die Packung eine Anpresskraft aus. Das Federelement ist unter Vorspannung in die Vorspanneinrichtung montierbar und erzeugt bereits im Ruhezustand, d.h. ohne eine Anpresskraft auf die Druckhülse auszuüben, eine bestimmte Vorspannkraft. Folglich kann das Federelement in einem vorgespannten Zustand, d.h. schon eine hohe Federkraft aufweisend, in die Stellventileinheit eingebaut werden.

Der zweite Anschlag ist in einem festen Abstand zum ersten Anschlag angeordnet, d.h. eine Ausdehnung zwischen dem ersten Anschlag und dem zweiten Anschlag ist gleichbleibend, und das Federelement wird bei gleichbleibendem Einbauraum, der insbesondere eine geringe axiale Ausdehnung aufweisen kann, in der Vorspanneinrichtung in die Stellarmatur eingebaut.

Um einen Betriebszustand der Stellventileinheit zu erreichen, wird die Vorspanneinrichtung eingebaut und die Packung wird verspannt. Beim Montieren der Vorspanneinrichtung in die Stellventileinheit wird der axiale Abstand zwischen der Vorspanneinrichtung und dem Gegenlager eingestellt, d.h. der erste Anschlag sowie der zweite Anschlag bewegen sich axial in Richtung Gegenlager. Das Druckelement ist lagefest relativ zur Druckhülse angeordnet. Dadurch verbleibt es in der gleichen axialen Lage. Der zweite Anschlag entfernt sich in Richtung Gegenlager vom Druckelement, so dass das Federelement sich nun über das Druckelement auf der Druckhülse abstützt und die Packung verspannt. Ein axialer Abstand zwischen dem ersten Anschlag und dem Druckelement verringert sich. Das Federelement wird zwischen dem ersten Anschlag und dem Druckelement weiter komprimiert. Dadurch erhöht sich die Vorspannkraft des Federelements. In vorteilhafter Weise kann über die erfindungsgemäße Vorspanneinrichtung das Federelement schon eine hohe Vorspannkraft aufweisend in die Stellventileinheit eingebaut werden, wobei die Anpresskraft des Federelements beim Einbau in die Stellventileinheit weiter erhöht werden kann. Auf diese Weise ist eine Vorspannkraft des Federelements angepasst an die Ausführungsbedingungen der abdichtenden Packung einstellbar. In Abhängigkeit der Zusammensetzung der Packung soll die Vorspannkraft nicht zu fest eingestellt sein, um beispielsweise eine Reibung der Ventilstange gering zu halten. Sie muss jedoch hoch genug eingestellt sein, um sicherzustellen, dass radiale Dichtkräfte ein Entweichen eines Prozessfluids vermeiden.

Bei der Montage der Vorspanneinrichtung entfernt sich der zweite Anschlag in Richtung Gegenlager vom Druckelement und ein axialer Abstand zwischen dem zweiten Anschlag und dem Druckelement wird erhöht. Durch die Energie der Vorspannung übt das Federelement im montierten Zustand der Vorspanneinrichtung eine Anpresskraft auf das Druckelement und folglich auf die Druckhülse aus, um diese bei Verschleiß und/oder Setzen der Packung axial in Richtung Gegenlager zu bewegen. Bei nachlassender Anpresskraft wird die Packung über die Vorspannkraft des Federelements automatisch nachgespannt bis eine axiale Lageveränderung der Druckhülse bzw. des Druckelements durch den zweiten Anschlag aufgehalten ist. Der zweite Anschlag dient somit als Begrenzung der axialen Federauslenkung sowie als Begrenzung für die axiale Lageveränderung der Druckhülse. Dadurch kann ein Dichtspalt zwischen der Ventilstange und dem Ventilgehäuse auf ein den Betriebsbedingungen angepasstes Minimum eingestellt werden, und bei nachlassender Dichtigkeit der Packung je nach Setzungseigenschaften und Lebensdauer der Packung kontrolliert nachgezogen werden. Bei maximaler Auslenkung des Federelements bis zum begrenzenden zweiten Anschlag kann entweder das Federelement über die Vorspanneinrichtung nachgespannt werden oder die erschöpfte Packung kann ausgewechselt werden, um eine Packungsleckage durch nachlassende Dichtigkeit der Packung zu vermeiden. In vorteilhafter Weise ist durch das Begrenzen der Lageveränderung der Druckhülse eine gute Einstellbarkeit der Anpressung unterschiedlicher Packungen ermöglicht und eine Packungsleckage frühzeitig vermeidbar.

Vorzugsweise ist das Druckelement als ein Komprimierungsflansch ausgebildet. Der Komprimierungsflansch kann beispielsweise als eine plattenförmige Druckplatte ausgebildet sein. Sie dient zur gleichmäßigen Verteilung der Anpresskraft auf die Druckhülse und folglich auf die Packung. Dabei kann eine ballig ausgebildete Verbindungsfläche zwischen dem Druckelement und der Druckhülse, die insbesondere eine ballige Ringschulter aufweist, dazu dienen eine Wirkungskraft des Federelements bei Asymmetrie in Axialrichtung zu übertragen. Der Komprimierungsflansch verhindert, dass die Federelement die Druckhülse unsymmetrisch belastet. Die Druckhülse kann beispielsweise mit einem Vorsprung, einer Ringschulter oder dergleichen ausgebildet sein, auf der sich der Komprimierungsflansch abstützt und die Druckhülse zumindest teilweise radial umgreift. Es ist auch denkbar, dass der Komprimierungsflansch einteilig mit der Druckhülse ausgebildet ist. So kann beispielsweise ein radialer Vorsprung der Druckhülse den Komprimierungsflansch ausbilden.

Bevorzugt weist die Vorspanneinrichtung ein Gehäuse auf, das einen Stelldeckel umfasst, der den ersten Anschlag ausbildet und mit einem Stellkörper verbunden ist, der den zweiten Anschlag ausbildet. Der Stelldeckel gewährleistet, dass das Federelement im Stellkörper unverlierbar gehalten ist. Der Stelldeckel und der Stellkörper können dichtend und lösbar, beispielsweise über Schraubverbindungen, miteinander verbunden sein. Die zweiteilige Ausbildung der Vorspanneinrichtung ermöglicht, dass das Federelement zwischen dem ersten Anschlag des Stelldeckels und dem zweiten Anschlag des Stellkörpers der Vorspanneinrichtung insbesondere bei kleinem Einbauraum auf einfache Weise einspannbar ist. In vorteilhafter Weise ist es möglich die Vorspanneinrichtung als eine vormontierte Einheit in die Stellventileinheit einzubauen, um z.B. einen Aufwand der Einbauarbeiten am Standort der Stellventileinheit zu reduzieren.

Gemäß einer bevorzugten Ausführungsform weist der Stellkörper ein inneres Stellgewinde auf, das in einem montierten Zustand der Stellventileinheit mit einem Außengewinde des Ventilgehäuses in Eingriff steht. Das Eindrehen des Stellkörpers gegenüber dem Ventilgehäuse kann beispielsweise mit einem Drehmomentschlüssel oder einer definierten Anzahl von Umdrehungen des Stellkörpers erfolgen, bspw. 6 bis 7 Rotationen. Das hat zur Folge, dass die Vorspanneinrichtung, d.h. der erste Anschlag sowie der zweite Anschlag, sich axial in Richtung Gegenlager bewegt. Dadurch entfernt sich der zweite Anschlag von dem lagefest zur Druckhülse angeordneten Druckelement, auf dem sich das Federelement unmittelbar abstützt, und das Federelement wird zwischen dem ersten Anschlag und dem Druckelement weiter komprimiert. Eine benötigte, vordefinierte Federkraft, welche das Federelement zur Verspannung der Packung erreichen soll, ist abhängig von einer Ausführung bzw. Zusammenstellung der Packung. Somit ist über die erfindungsgemäße Vorspanneinrichtung, die im axialen Abstand zum Gegenlager über das Stellgewinde verstellbar ist, eine Vorspannkraft des Federelements entsprechend den Betriebs- und/oder Ausführungsbedingungen der Packung einstellbar.

Vorzugsweise ist die Vorspanneinrichtung mit einer Messeinrichtung verbunden, die ein Messelement zur Detektion der axialen Lageveränderung des Druckhülse umfasst. Die Messeinrichtung kann beispielsweise fest mit der Vorspanneinrichtung verbunden sein, d.h. die Messeinrichtung kann zusammen mit der Vorspanneinrichtung als eine Baugruppe vormontiert sein. Das trägt zur vereinfachten Montage der Stellventileinheit bei.

Alternativ ist es möglich, dass die Messeinrichtung lösbar mit der Vorspanneinrichtung verbunden ist. Sie können z.B. miteinander verschraubt oder verklipst sein. Das hat den Vorteil, dass die Messeinrichtung beispielsweise erst nach Verschrauben des Stellkörpers und des Ventilgehäuses mit der Vorspanneinrichtung verbunden wird, wodurch insbesondere ein Verdrehen einer Verkabelung der Messeinrichtung verhindert ist.

Die Messeinrichtung umfasst ein Messelement, das die axiale Lageveränderung der Druckhülse relativ zur Vorspanneinrichtung bzw. zum zweiten Anschlag detektiert. Insbesondere kann die Detektion auf einer berührungslosen beispielsweise induktiven, kapazitiven oder magnetischen Funktionsweise oder dergleichen basieren. Es ist auch denkbar, dass das Messelement als ein Schalter ausgebildet ist, der durch ein Betätigungsmittel betätigt ist, um die Lageveränderung der Druckhülse zu detektieren.

Gemäß einer bevorzugten Ausführungsform ist das Messelement als ein magnetempfindlicher Sensor ausgebildet, der mit einem Magneten zusammenwirkt, der mit der Druckhülse verbunden ist. Der Sensor detektiert eine relative Lageveränderung der Druckhülse über den mit der Druckhülse verbundenen Magneten berührungslos und verschleißfrei. Durch die Verwendung eines solchen Sensors ist sowohl eine schrittweise Lageerfassung als auch eine kontinuierliche Lageerfassung der Druckhülse möglich. Der Magnetsensor kann beispielsweise als ein xMR-Chip oder ein Hall-Effekt Sensor ausgebildet sein. In vorteilhafter Weise sind Magnetsensoren unempfindlich gegenüber Temperaturschwankungen sowie Staub und Feuchtigkeit in rauen Umgebungen. Sie weisen eine hohe Genauigkeit, Zuverlässigkeit sowie Robustheit auf.

Vorzugsweise weist die Messeinrichtung ein Sensorgehäuse zur Anordnung des Sensors auf, wobei das Sensorgehäuse eine Führungsnut ausbildet, in welcher der Magnet axial beweglich geführt ist, und wobei der Magnet über einen magnetisch leitenden Haftring mit der Druckhülse verbunden ist, der zumindest teilweise radial in die Führungsnut eingreift. Der Sensor ist in einer festen Lage am Sensorgehäuse angeordnet. Das Sensorgehäuse trägt zur Robustheit und Widerstandsfähigkeit der Messeinrichtung in rauen Außeneinsätze und/oder in schwieriger Umgebung bei, da der Sensor in einem sicheren Bereich montiert ist.

Der Magnet ist axial beweglich und herausfallsicher in der Führungsnut des Sensorgehäuses geführt. Das Sensorgehäuse weist entlang einer an der Druckhülse angeordneten Längsseite eine Freimachung auf, welche die axiale Führungsnut ausbildet. Der Magnet und eine vom Sensorgehäuse gebildete Begrenzung der Führungsnut weisen nahezu komplementäre Formen auf, wodurch der Magnet herausfallsicher und nahezu spielfrei in der sich in Axialrichtung erstreckenden Führungsnut angeordnet ist. Der Magnet kann beispielsweise in Axialrichtung zylinderförmig ausgebildet sein, wobei die Begrenzung der Führungsnut im Querschnitt einen die Führungsnut bildenden Lochkreis zumindest teilweise über einen Äquator hinaus umgreift. Das Sensorgehäuse kann beispielsweise eine im Querschnitt halbmondförmige Begrenzung der Führungsnut ausbilden.

Dabei ist der Magnet über einen magnetisch leitenden Haftring mit der Druckhülse verbunden. An einem freien Ende der Druckhülse ist der Haftring beispielsweise über einen Befestigungsring mit der Druckhülse verbunden. Der Haftring ist insbesondere stirnseitig an der Druckhülse angeordnet und umgreift die Ventilstange radial. Dadurch bewirkt die axiale Lageveränderung der Druckhülse eine axiale Lageveränderung des Magneten.

In Axialrichtung betrachtet ist die vom Sensorgehäuse gebildete Begrenzung der Führungsnut ohne Überschneidung mit dem Haftring an der Druckhülse angeordnet. In Radialrichtung dringt der Haftring zumindest teilweise in die Führungsnut ein. Das ermöglicht, dass die Druckhülse den am Haftring haftenden Magneten in Axialrichtung in der Führungsnut mitnimmt, wenn sie sich aufgrund des Verschleißes der Packung bewegt.

Die axiale Lageveränderung der Druckhülse bewirkt eine axiale Lageveränderung des Magneten relativ zum Sensor, der lagefest an der Vorspanneinrichtung angeordnet ist. Der Magnet ist im Sensorgehäuse räumlich getrennt vom Sensor untergebracht, und verbleibt über die axiale Führung in der Führungsnut immer in einem festen radialen Abstand relativ zum Sensor. Dadurch ist eine stabile Abstandsmessung der Messeinrichtung in Axialrichtung ermöglicht. Auf diese Weise ist über den Magnetsensor eine zuverlässige Verschleißanzeige der Packung gewährleistet.

Bevorzugt ist der Magnet gegenüber dem Haftring in Umfangsrichtung des Ventilschafts drehbar angeordnet. Der Stellkörper der Vorspanneinrichtung, die insbesondere zusammen mit der Messeinrichtung als eine Baugruppe ausgebildet ist, wird zur Einstellung der Federvorspannkraft gegenüber dem Ventilgehäuse eingeschraubt. D.h. die Vorspanneinrichtung wird zusammen mit dem Sensorgehäuse über den Stellkörper mehrmals um die Achse gedreht, wobei das Sensorgehäuse den Magneten in der Rotationsbewegung in Umfangsrichtung des Ventilschafts auf dem Haftring mitnimmt. Dabei ist die Führungsnut des Sensorgehäuses derart an der Druckhülse angeordnet, dass bei einer Rotation der Vorspanneinrichtung um ihre Achse, der Magnet am Haftring haftend um die Ventilstange rotiert wird.

Gemäß einer bevorzugten Ausführungsform kommuniziert das Messelement bidirektionell mit einer Kontrolleinheit, die mit einer Bedieneinheit der Messeinrichtung kommunizierend verbunden ist, wobei die Bedieneinheit wenigstens eine Anzeigeeinheit sowie eine Kalibrierungstaste aufweist. Die Bedieneinheit kann beispielweise als ein mobiles Endgerät ausgebildet sein, das z.B. kabellos mit der Kontrolleinheit kommuniziert.

Das insbesondere als ein magnetischer Sensor ausgebildete Messelement kommuniziert mit der Kontrolleinheit zur Verarbeitung von Messdaten des Messelements. Der Sensor kann beispielsweise mit einer integrierten Mikroelektronik ausgebildet sein, welche die Messdaten im Sensor verarbeitet und diese insbesondere an die Anzeigeeinheit weiterleitet, damit z.B. ein Benutzer diese ablesen kann. Es ist möglich, dass der Sensor und die Kontrolleinheit beispielsweise auf einem einzigen Chip integriert sind. Es ist auch denkbar, dass der Sensor mit einer externen Kontrolleinheit verbunden ist, d.h. der Sensor und die Kontrolleinheit sind separat ausgebildet.

Mit der Kalibrierungstaste der Bedieneinheit erfolgt eine Einstellung des Sensors auf eine Nulllage sehr präzise auf elektronischem Weg. Dadurch kann der Sensor eine Relativbewegung des Magneten zum Sensor erfassen. Die Kontrolleinheit verarbeitet die Messdaten des Sensors mit einer Auswerteelektronik und leitet Positionswerte der Druckhülse an die Anzeigeeinheit weiter. Im laufenden Betrieb kann nun jederzeit ein Positionswert der Druckhülse abgelesen werden. Es ist sowohl eine diskrete Lageerfassung als auch eine kontinuierliche Lageerfassung der Druckhülse über Zeit möglich. So kann der Benutzer der Stellventileinheit die Lageveränderung der Druckhülse ablesen, und auf einen Verschleiß der Packung schließen. Erreicht der Positionswert eine vordefinierte Schwelle, so kann beispielsweise ein Alarm ausgegeben werden, damit die Packung entweder nachgespannt oder ausgewechselt wird.

Gemäß einer bevorzugten Ausführungsform detektiert die Kontrolleinheit über eine Kraft-Wegkennlinie des Federelements die Anpresskraft der Packung. Die Kraft-Wegkennlinie des Federelement kann in einem Datenspeicher der Kontrolleinheit hinterlegt sein. Die Kraft-Wegkennlinie beschreibt das Verhältnis zwischen Federkraft und Federweg und zeigt, wie das Federelement sich bei der Arbeit verhält. Je nach Ausführungsform verhält sich das Federelement unterschiedlich bei der Arbeit. Das Federelement kann insbesondere als ein kompaktes Tellerfederpaket ausgebildet sein, das sich zum Einbau in begrenzte Bauräume eignet, bei denen trotzdem hohe Kräfte benötigt werden. Alternativ ist es auch denkbar, dass das Federelement als eine Schraubendruckfeder ausgebildet ist. Aufgrund der gemessenen axialen Lageveränderung der Druckhülse kann über die Kraft-Wegkennlinie im laufenden Betrieb die verbleibende Vorspannkraft des Federelements über Zeit angezeigt werden. Somit kann auch die axiale Veränderung der Kraft auf die Packung erfasst werden. In vorteilhafter Weise ist es beispielsweise möglich während des Montage-Vorgangs die Anpresskraft über die Anzeigeeinheit zu überwachen und dementsprechend den Stellkörper nachzuziehen.

So kann über die Kraft-Wegkennlinie zusammen mit dem Sensor eine exakte Einstellung der axialen Spannkraft des Federelements und somit eine den Betriebsbedingungen angepasste Anpresskraft auf die Packung erreicht werden. Vor der Montage in die Stellventileinheit ist das Federelement in der Vorspanneinrichtung auf eine bestimmte Anpresskraft vorgespannt, wobei der Sensor als Kraftsensor kalibriert ist. Die Vorspannkraft des Federelements im vormontierten Zustand der Vorspanneinrichtung kann beispielsweise über die Bedieneinheit angezeigt werden. Dann wird bei der Montage der Vorspanneinrichtung in die Stellventileinheit der Stellkörper in das Ventilgehäuse eingeschraubt. Der Sensor kann an einer bestimmten Einschraubstelle dem Magneten gegenüber genullt werden, beispielsweise an der Einschraubstelle, an der das Federelement unter Zwischenlage des Druckelements ohne Anpresskraft an der Druckhülse anliegt und eine Anpresskraft auf die Druckhülse durch den zweiten Anschlag verhindert ist. An dieser Einschraubstelle befindet sich der Magnet in einem Bereich eines optimalen Messanfangs des Sensors, beispielsweise in seiner untersten Position relativ zum Sensor. Beim Verdrehen der Vorspanneinrichtung bewegen sich der erste Anschlag, der zweite Anschlag sowie der lagefest mit der Vorspanneinrichtung verbundene Sensor in Richtung Gegenlager. Dabei bewegt sich der Sensor relativ zum Magneten, der zweite Anschlag entfernt sich vom Druckelement und der erste Anschlag drückt das Federelement über das Druckelement an die Druckhülse. Dadurch wird das Federelement noch weiter komprimiert. Die Vorspanneinrichtung kann bis zu einem vordefinierten Sensorwert, der einer spezifischen Vorspannkraft des Federelements entspricht, weiter in das Ventilgehäuse gedreht werden, um eine gewünschte, vordefinierte axiale Anpresskraft gegen die Packung zu erreichen. Dabei kann die auf die Packung wirkende Anpresskraft beim Montieren der Vorspanneinrichtung sowie im Betriebszustand der Stellventileinheit kontinuierlich auf der Bedieneinheit angezeigt sein. Die erfindungsgemäße Vorspanneinrichtung kann auf einfache Weise auf die Betriebsbedingungen unterschiedlich hergestellter und mit unterschiedlichen Längen ausgebildeten Packungen eingestellt werden. Ferner kann während des Nachziehvorgangs des Federelements die Anpresskraft auf die Packung über die Anzeigeeinheit überwacht werden, und der Stellkörper entsprechend der Anzeige der Anpresskraft nachgezogen werden.

Bevorzugt ist die Kontrolleinheit mit wenigstens einem Aktor kommunizierend verbunden, der zum Nachstellen der Vorspannkraft mit dem Stellkörper verbunden ist. Der Aktor wandelt von der Kontrolleinheit empfangene Daten in eine mechanische Bewegung um. D.h. der Aktor bewirkt eine Rotation des Stellkörpers, um die auf die Packung wirkende Anpresskraft nachzustellen. Das kann beispielsweise bei Erreichen einer voreingestellten Schwelle der Lageveränderung der Druckhülse und/oder Vorspannkraft des Federelements erfolgen. In vorteilhafter Weise erfolgt das Nachstellen der Vorspannkraft des Federelements automatisch durch Nachstellen der Vorspanneinrichtung bzw. Anziehen des Stellkörpers mittels eines Aktors.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: ein Ausschnitt einer Schnittansicht einer erfindungsgemäßen Stellventileinheit mit einer Vorspanneinrichtung in einem vormontierten Zustand;
- Fig. 2: ein Ausschnitt einer Schnittansicht einer erfindungsgemäßen Stellventileinheit mit einer Vorspanneinrichtung in einem Betriebszustand der Stellventileinheit;
- Fig. 3: eine perspektivische Draufsicht auf eine Vorspanneinrichtung einer erfindungsgemäßen Stellventileinheit von schräg oben; und
- Fig. 4: eine Draufsicht auf eine Vorspanneinrichtung einer erfindungsgemäßen Stellventileinheit von oben.

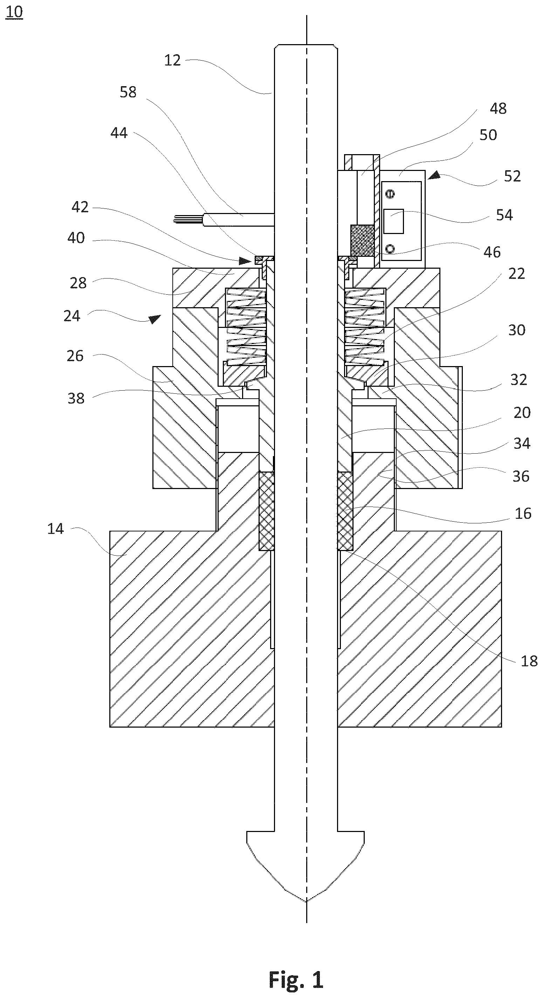

Fig. 1 zeigt einen Ausschnitt einer Stellventileinheit 10, die eine Ventilstange 12 und ein Ventilgehäuse 14 aufweist. Die Ventilstange 12 ist über eine Dichtanordnung, die eine Packung 16 aufweist, gegenüber dem Ventilgehäuse 14 abgedichtet.

Die Packung 16 ist in axialer Richtung zwischen einem Gegenlager 18 und einer Druckhülse 20 angeordnet. Die Druckhülse 20 ist axial verschiebbar gegenüber dem Ventilgehäuse 14 gelagert, wobei das Gegenlager 18 Bestandteil des Ventilgehäuses 14 ist oder im Ventilgehäuse 14 fest angeordnet sein kann. Durch die Druckhülse 20 kann die Packung 16 axial komprimiert werden, wodurch eine axiale sowie radiale Dichtwirkung der Packung 16 erreicht ist.

Die Anpresskraft zur Komprimierung der Packung 16 wird von einem Federelement 22 bereitgestellt, das vorliegend als ein zentriertes Tellerfederpaket ausgebildet ist. Vorliegend umgreift das Federelement 22 die Ventilstange 12 radial. Das Federelement 22 stützt sich an einer Vorspanneinrichtung 24 ab. Die Vorspanneinrichtung 24 weist ein Gehäuse auf, das einen Stellkörper 26 ausbildet, der dichtend mit einem Stelldeckel 28 verbunden ist. Am Stelldeckel 28, der einen ersten Anschlag 40 ausbildet, stützt sich ein erstes Ende des Federelements 22 ab. Das jeweils andere Ende des Federelements 22 stützt sich vorliegend unter Zwischenlage eines Druckelements 30, das vorliegend als eine Druckplatte bzw. ein Komprimierungsflansch ausgebildet ist, an einem zweiten Anschlag 32 ab, der vom Stellkörper 26 ausgebildet ist.

Das Federelement 22 wird im vormontierten Zustand der Vorspanneinrichtung 24, insbesondere bei kleinem Einbauraum, zwischen dem ersten Anschlag 40 und dem zweiten Anschlag 32 axial vorgespannt, so dass es bereits im Ruhezustand, d.h. vordem es eine Anpresskraft auf die Druckhülse 20 ausübt, eine Vorspannkraft erzeugt. Das Federelement 22 ist vorliegend in einem vorgespannten Zustand in die Stellventileinheit 10 eingebaut.

Zur Montage der Vorspanneinrichtung 24 in die Stellventileinheit 10 ist der Stellkörper 26 an einer Innenseite mit einem Stellgewinde 34 ausgebildet, das mit einem Außengewinde 36 des Ventilgehäuses 14 in Eingriff gebracht ist. Durch Anziehen des Stellkörpers 26 wird das Stellgewinde 34 in das Außengewinde 36 eingedreht, bis eine Einschraubstelle mit einem spürbaren Widerstand erfolgt. An dieser Einschraubstelle der Vorspanneinrichtung 24 mit dem Ventilgehäuse 14 liegt die Druckhülse 20 ohne Anpresskraft unmittelbar an der Packung 16 an, wobei das Druckelement 30 vorliegend über einen Vorsprung 38 an der Druckhülse 20 anliegt. An dieser Einschraubstelle ist das Federelement 22 zwischen dem ersten Anschlag 40 und dem zweiten Anschlag 32 eingespannt, ohne eine axiale Anpresskraft auf die Druckhülse 20 bzw. die Packung 16 zu verüben. Die Vorspanneinrichtung 24 bzw. der zweite Anschlag 32 befindet sich vorliegend in einer Ausgangsposition, die beispielsweise als eine Nullposition zur Messung einer Lageveränderung der Druckhülse 20 aufgrund der Setzungseigenschaften der Packung 16 definiert werden kann.

Vorliegend ist an einem aus der Vorspanneinrichtung 24 herausragenden Ende der Druckhülse 20 ein umlaufender Befestigungsring 42 angeordnet. Auf der Stirnseite weist der Befestigungsring 42 einen Haftring 44 aus magnetisch leitendem Material auf. Ein vorliegend zylinderförmiger Magnet 46 haftet mittels Magnetkraft am Haftring 44. Der Magnet 46 ist in einer Führungsnut 48 aufgenommen, in der er sich axial gleitend nahezu reibungs- und spielfrei bewegen kann. Dadurch kann er bei einer axialen Lageveränderung bzw. Bewegung der Druckhülse 20 stets in der Führungsnut 48 mitgenommen werden.

Die Führungsnut 48 ist von einem Sensorgehäuse 50 einer Messeinrichtung 52 ausgebildet, die mit der Vorspanneinrichtung 24 verbunden ist und über einen Kabelanschluss 58 mit Strom versorgt ist. Der Kabelanschluss 58 kann beispielsweise auch zur Übertragung von Daten insbesondere an weitere Bauteile der Stellventileinheit dienen. Vorliegend ist das Sensorgehäuse 50 mit dem Stelldeckel 28 der Vorspanneinrichtung 24 fest verbunden. Es ist denkbar, dass die Messeinrichtung 52 und die Vorspanneinrichtung 24 beispielsweise eine vormontierte Baueinheit bilden.

Im Sensorgehäuse 50 ist ein magnetsensitiver Sensor 54 angeordnet, der die axiale Bewegung des Magneten 46 berührungslos erfasst. Der Sensor 54 kann insbesondere als ein xMR-Chip oder Hall-Effekt Sensor ausgebildet sein. Das Sensorgehäuse 50 ermöglicht, dass in Radialrichtung der Vorspanneinrichtung 24 ein enger, fester Abstand zwischen dem Magnet 46 und dem Sensor 54 eingehalten ist, um eine axiale Wegmessung oder Position des Magneten 46 zuverlässig zu erfassen. Vorliegend befindet sich der Magnet 46 in seiner axial niedrigsten Position relativ zum Sensor 54 bzw. in einem Bereich eines optimalen Messanfangs des Sensors 54.

Der Sensor 54 kommuniziert bidirektionell mit einer vorliegend nicht dargestellten Kontrolleinheit, deren Auswertelektronik die Messdaten des Sensors 54 verarbeitet. Insbesondere können die Kontrolleinheit und der Sensor 54 zusammen auf einem Chip integriert sein. Die Kontrolleinheit ist mit einer vorliegend ebenfalls nicht dargestellten Bedieneinheit 56 der Messeinrichtung 52 kommunizierend verbunden. Die Bedieneinheit 56 weist eine Kalibrierungstaste auf, mit welcher der Sensor 54 beispielsweise in der oben beschriebenen Ausgangsposition der Vorspanneinrichtung 24 genullt werden kann. Der Magnet 46 befindet sich dabei in einer bestimmten Position relativ zum Sensor 54. Durch die Kalibration kann der Sensor 54 eine Relativbewegung des Magneten 46, und folglich eine relative Axialbewegung der Druckhülse 20 überwachen, wobei die ausgewerteten Messdaten auf einer Anzeigeeinheit der Bedieneinheit 56 gezeigt sind.

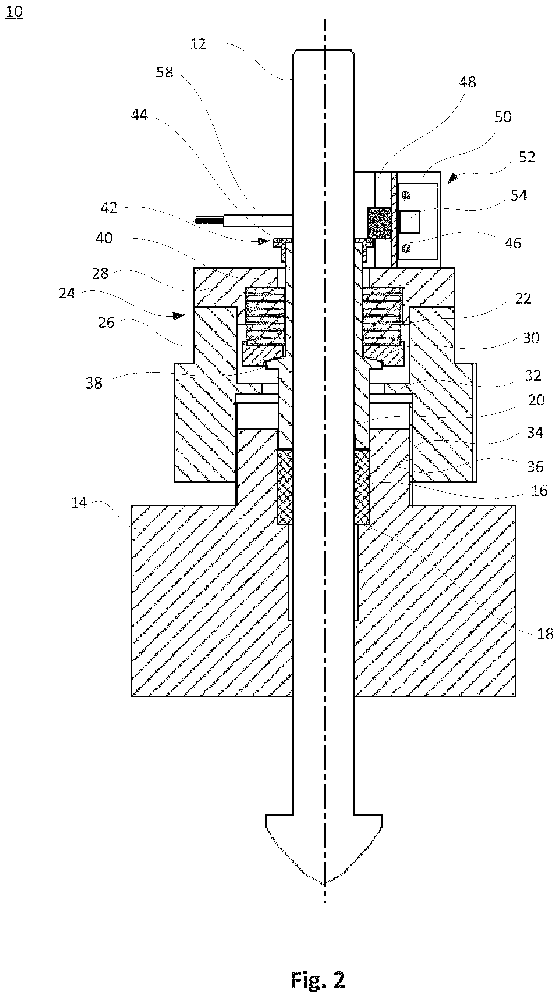

In Fig. 2 ist die Dichtanordnung der Stellventileinheit 10 in einem Betriebszustand der Stellventileinheit 10, d.h. im verspannten Zustand der Packung 16 dargestellt. Über die Vorspanneinrichtung 24 ist eine axiale Federspannung auf die Packung 16 einstellbar. Der Stellkörper 26 wird aus der beispielsweise in Fig. 1 beschriebenen Nullposition weiter in das Ventilgehäuse 14 eingedreht, z.B. über 6 bis 7 Rotationen. Das hat zur Folge, dass der erste Anschlag 40 sowie der zweite Anschlag 32 sich in Richtung Gegenlager 18 bewegen. Dadurch weist der zweite Anschlag 32 gegenüber der oben in Fig. 1 beschriebenen Ausgangsposition einen axialen Abstand zum Druckelement 30 auf und das Federelement 22 wird zwischen dem Stelldeckel 28 und dem Druckelement 30 weiter komprimiert, so dass die Vorspannkraft des Federelements 22 und folglich eine Anpresskraft auf die Druckhülse 20 sowie auf die Packung 16 erhöht ist. Die axiale Bewegung der Vorspanneinrichtung 24 in Richtung Gegenlager 18 hat außerdem zur Folge, dass die Druckhülse 20 sich aus dem Stelldeckel 28 der Vorspanneinrichtung 24 heraus erstreckt, und dass der durch die Druckhülse 20 mitgenommene Magnet 46 sich relativ zum Sensor 54 bewegt. Die Vorspanneinrichtung 24 wurde vorliegend im Vergleich zu Fig. 1 über mehrere Rotationen des Stellkörpers 26 in das Ventilgehäuse 14 eingeschraubt, wodurch der Magnet 46 dem Sensor 54 direkt gegenüberliegend auf gleicher axialer Höhe angeordnet ist.

Zur exakten Einstellung der Anpresskraft mit der das Federelement 22 auf die Packung 16 wirken soll, kann der Sensor 54 in Kombination mit einer Kraft-Wegkennlinie für des Federelements 22 genutzt werden. Die Kraft-Wegkennlinie ist beispielsweise in einem Speicher der Kontrolleinheit hinterlegt und der Sensor 54 ist bereits vor der Montage der Vorspanneinrichtung als Kraftsensor kalibriert. Das Federelement 22 ist in der Vorspanneinrichtung 24 vor der Montage in die Stellventileinheit 10 auf eine gewünschte Vorspannkraft vorgespannt, die beispielsweise über die vorliegend nicht dargestellte Bedieneinheit 56 ablesbar ist. Über die relative axiale Verschiebung des Magneten 46 aus der beispielhaft oben beschriebenen Null-Position kann eine axiale Veränderung der Anpresskraft des Federelements 22 ermittelt werden. So kann der Stellkörper 26 bis zu einem vordefinierten Wert des Sensors 54, d.h. einer spezifischen Vorspannkraft, die einer bestimmten axialen Lageveränderung des Magneten 46 entspricht, in das Ventilgehäuse 14 eingedreht werden. Der axiale Abstand, über den sich der Magnet 46 relativ zum Sensor 54 bewegt, entspricht einer Komprimierung des Federelements 22, und somit einer spezifischen Veränderung der Vorspannkraft, mit der das Federelement 22 nunmehr auf die Packung 16 wirkt, nachdem der zweite Anschlag 32 durch Verdrehen des Stellkörpers 26 in Richtung Gegenlager 18 axial beabstandet zum Komprimierungsflansch 30 angeordnet ist. Über die Kraft-Wegkennlinie kann die exakte Einstellung einer vordefinierten axialen Anpressung des Federelements 22 gegen die Packung 16 erfolgen, um mit einer den Betriebsbedingungen angepassten Anpresskraft auf unterschiedlich hergestellte und mit unterschiedlichen Längen ausgebildeten Packungen 16 zu arbeiten.

Es ist denkbar, dass die Messeinrichtung 52 zusätzlich zum Kabelanschluss 58 eine Batterie oder einen Akku aufweist. Das hat den Vorteil, dass der Sensor 54 und die Bedieneinheit 56 auch vor einer Inbetriebnahme der gesamten Stellventileinheit 10 mit Strom versorgt sind. Dadurch ist vor der Inbetriebnahme der Stellventileinheit 10 eine Darstellung der auf die Packung 16 wirkende Anpresskraft auf der Anzeigeeinheit während der Montage der Vorspanneinrichtung 24 in die Stellventileinheit 10 möglich.

Während der Inbetriebnahme der Stellventileinheit 10 weist die federvorgespannte Druckhülse 20 aufgrund der Verschleiß- und/oder Setzungseigenschaften der Packung 16 eine axiale Bewegung relativ zum zweiten Anschlag 32 auf. Diese Bewegung ist proportional zu einem Setzweg der Packung 16 und lässt auf den Verschleißzustand der Packung 16 schließen. Bei der axialen Bewegung der Druckhülse 20 wird der Magnet 46 stets mitgenommen. Folglich entspricht die axiale Bewegung des Magneten 46 relativ zum Sensor 54 der Bewegung der Druckhülse 20 relativ zum zweiten Anschlag 32. Im laufenden Betrieb kann nun jederzeit ein Sensorwert, der einer Position der Druckhülse 20 entspricht, von der Anzeigeeinheit abgelesen werden. Auf diese Weise kann der Setzvorgang der Packung 16 über Zeit gemessen und überwacht werden. Über die Kraft-Wegkennlinie des Federelements 22 lässt sich die Vorspannkraft mit der das Federelement 22 auf die Packung 16 wirkt sowie deren Veränderung über Zeit ableiten. Diese Vorspannkraft kann ebenfalls angezeigt und überwacht werden.

Die Druckhülse 20 gibt den Anpresskräften des Federelements 22 so lange nach, bis das Druckelement 30 am zweiten Anschlag 32 anliegt. Der zweite Anschlag 32 begrenzt die Auslenkung des vorgespannten Federelements 22 und somit die axiale Lageveränderung der Druckhülse 20. Auf diese Weise kann über den zweiten Anschlag 32 eine Federlängung des Federelements 22 und somit eine Lageveränderung der Druckhülse 20 begrenzt werden, um ein Nachlassen der Dichtigkeit der Packung 16 und ein Austreten des Prozessfluids zu verhindern.

Bei Überschreiten eines kritischen Setzwerts der Packung 16 und/oder bei Überschreiten und/oder Unterschreiten einer vordefinierten Vorspannkraft kann beispielsweise ein Alarm ausgelöst werden. Je nach Beschaffenheit und/oder Ausführungsform der Packung 16 ist entweder ihre Lebensdauer erschöpft und sie muss ausgewechselt werden oder sie muss nachgespannt werden. Während des Nachziehvorgangs kann die auf die Packung 16 wirkende Anpresskraft über die Bedieneinheit 56 angezeigt und überwacht werden, so dass der Stellkörper 26 entsprechend der gewünschten Anpresskraft nachgezogen wird. Es ist beispielsweise möglich die Vorspanneinrichtung 24 automatisch mittels eines auf den Stellkörper 26 wirkenden vorliegend nicht dargestellten Aktors auf die gewünschte Anpresskraft nachzuziehen.

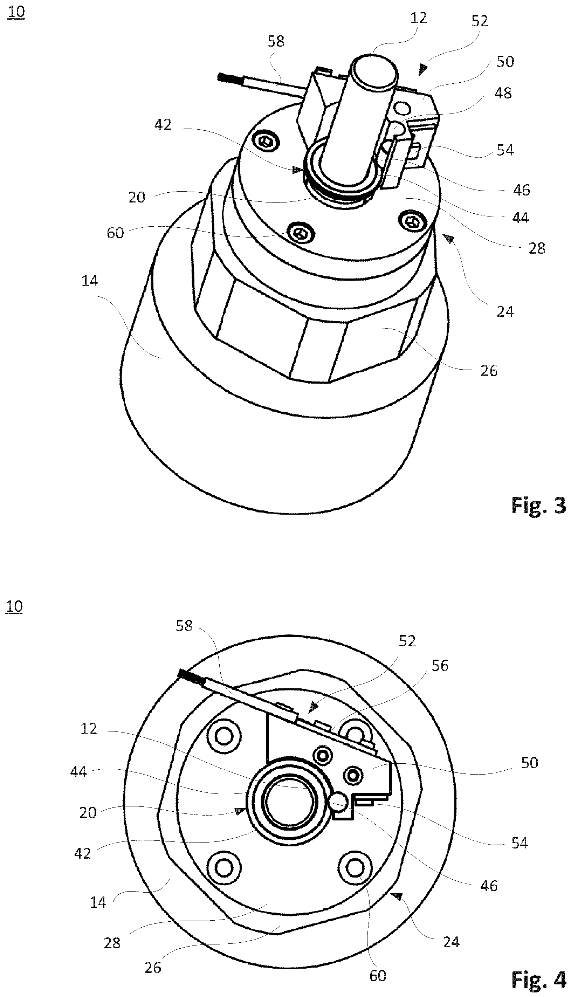

In Fig. 3 ist eine perspektivische Draufsicht auf eine Vorspanneinrichtung 24 einer erfindungsgemäßen Stellventileinheit 10 nach Fig.1 von schräg oben dargestellt. Die Vorspanneinrichtung 24 umschließt die federvorgespannte Druckhülse 20 mit dem Stelldeckel 28 und dem Stellkörper 26 radial. Der Stelldeckel 28 ist über Schraubverbindungen 60 lösbar mit dem Stellkörper 26 verbunden. Das vorliegend nicht dargestellte Federelement 22 ist zwischen dem ersten Anschlag 40 des Stelldeckels 28 und dem zweiten Anschlag 32 des Stellkörpers 26 in der Vorspanneinrichtung 24 unter axialer Vorspannung eingespannt.

Der Stellkörper 26 ist über das vorliegend nicht dargestellte innere Stellgewinde 34 mit dem Ventilgehäuse 14 verbunden. Der Stellkörper 26 ist zum Nachstellen der Vorspanneinrichtung 24 vorliegend mit einer Mantelfläche ausgebildet, die ein Antriebsprofil für einen Gabelschlüssel aufweist. Es ist auch denkbar, dass die Mantelfläche ein Profil für ein anderes Werkzeug aufweist, beispielsweise für einen Nasen-Hakenschlüssel. Über eine definierte Anzahl von Umdrehungen des Stellkörpers 26 relativ zum Ventilgehäuse 14 ist die vordefinierte Vorspannkraft einstellbar, mit der das Federelement 22 im montierten Zustand der Vorspanneinrichtung 24 auf die Packung 16 wirken soll.

Am freien Ende der Druckhülse 20, das sich aus der Vorspanneinrichtung 24 heraus erstreckt, ist der Befestigungsring 42 angeordnet, über den der insbesondere ferromagnetische Haftring 44 stirnseitig an der Druckhülse 20 angeordnet ist. Der Haftring 44 umgreift die Ventilstange 12 radial. Der Magnet 46 der Messeinrichtung 52 ist magnetisch haftend mit dem Haftring 44 verbunden und ist in der durch das Sensorgehäuse 50 ausgebildeten Führungsnut 48 axial beweglich und herausfallsicher geführt.

Vorliegend ist der Magnet 46 zylinderförmig ausgebildet und nahezu spielfrei in der Führungsnut 48 angeordnet, wobei das Sensorgehäuse 50 im Bereich der Führungsnut 48 eine komplementäre Form zum Magneten 46 aufweist und diesen radial teilweise umgreift. Die sich in Axialrichtung erstreckende Führungsnut 48 ist unmittelbar an einer Umfangseite des Befestigungsrings 42 am Haftring 44 angeordnet. Der Haftring 44 dringt radial teilweise in die Führungsnut 48 ein. Auf diese Weise nimmt die Druckhülse 20 den Magneten 46 bei einer Axialbewegung aufgrund des Verschleißes der Packung 16 immer mit.

Die Axialbewegung der Druckhülse 20 ist durch die Relativbewegung des Magneten 46 relativ zum Sensor 54 ermittelbar. Zur Erfassung einer zuverlässigen axialen Wegmessung des Magneten 46 ist der Sensor 54 lagefest im Sensorgehäuse 50 der Messeinrichtung 52 in einem radial festen Abstand zum Magnet 46 angeordnet.

Fig. 4 stellt eine Draufsicht auf eine Vorspanneinrichtung 24 einer erfindungsgemäßen Stellventileinheit 10 nach Fig. 3 von oben dar. In der vorliegenden Ausführungsform ist die Messeinrichtung 52 als eine Baueinheit mit der Vorspanneinrichtung 24 ausgebildet. Beim An- und Nachziehen der Packung 16 wird die Vorspanneinrichtung 24 über den Stellkörper 26 verdreht. Das Sensorgehäuse 50 umschließt den Magneten 46 über einen Äquator des Magneten 46 hinaus. Der Magnet 46 ist gegenüber dem Haftring 44 in Umfangsrichtung des Ventilschafts 12 rotierbar angeordnet, d.h. bei einer Umdrehung des Stellkörpers 26 rotiert der Magnet 46 auf dem Haftring 44 haftend um die Ventilstange 12. Über das mit dem Stelldeckel 28 fest verbundene Sensorgehäuse 50 verbleibt der Magnet 46 trotz des Verdrehens der Vorspanneinrichtung 24 relativ zum Ventilgehäuse 14 radial in der gleichen Position relativ zum Sensor 54. Die Messeinrichtung 52, d.h. das Sensorgehäuse 50, der Sensor 54, der Magnet 46 sowie der Kabelanschluss 58, ist lagefest mit dem Stelldeckel 28 verbunden und dreht sich beim Verdrehen des Stellkörpers 26 als eine Einheit um die Ventilstange 12.

Am Sensorgehäuse 50 ist vorliegend eine Bedieneinheit 56 angeordnet. Sie umfasst eine Anzeigeeinheit zur Anzeige des Setzvorgangs und/oder der auf die Packung 16 wirkende Anpresskraft. Es ist denkbar, dass die Bedieneinheit 56 beispielsweise als ein mobiles Endgerät ausgebildet ist, dass z.B. kabellos mit der Kontrolleinheit kommuniziert.

### Bezugszeichenliste

- 10: Stellventileinheit
- 12: Ventilstange
- 14: Ventilgehäuse
- 16: Packung
- 18: Gegenlager
- 20: Druckhülse
- 22: Federelement
- 24: Vorspanneinrichtung
- 26: Stellkörper
- 28: Stelldeckel
- 30: Druckelement
- 32: zweiter Anschlag
- 34: Stellgewinde
- 36: Außengewinde
- 38: Vorsprung
- 40: erster Anschlag
- 42: Befestigungsring
- 44: Haftring
- 46: Magnet
- 48: Führungsnut
- 50: Sensorgehäuse
- 52: Messeinrichtung
- 54: Sensor
- 56: Bedieneinheit
- 58: Kabelanschluss
- 60: Schraubverbindung

## Patentansprüche

1. Stellventileinheit (10) umfassend eine Ventilstange (12), die über eine Dichtanordnung gegenüber einem Ventilgehäuse (14) abgedichtet ist, wobei die Dichtanordnung eine Packung (16) aufweist, die axial zwischen einer Druckhülse (20) und einem Gegenlager (18) am Ventilgehäuse (14) aufgenommen ist, wobei die Druckhülse (20) relativ zum Ventilgehäuse (14) axial beweglich gelagert ist und eine von einem Federelement (22) über ein Druckelement (30) auf die Druckhülse (20) aufgebrachte Anpresskraft auf die Packung (16) überträgt, und wobei das Federelement (22) sich an einer Vorspanneinrichtung (24) abstützt, welche im Abstand zum Gegenlager (18) einstellbar ist, wodurch die auf die Druckhülse (20) wirkende Anpresskraft des Federelements (22) einstellbar ist, wobei das Federelement (22) axial zwischen einem ersten Anschlag (40) und einem zweiten Anschlag (32) der Vorspanneinrichtung (24) angeordnet ist, wobei in einem vormontierten Zustand der Vorspanneinrichtung (24) das Federelement (22) sich unter Vorspannung am ersten Anschlag (40) sowie am zweiten Anschlag (32) abstützt, **dadurch gekennzeichnet, dass** in einem Betriebszustand der Stellventileinheit (10) der zweite Anschlag (32) in Richtung Gegenlager (18) fest beabstandet zum ersten Anschlag (40) angeordnet ist und wobei die axiale Lageveränderung der Druckhülse (20) durch den in Richtung Gegenlager (18) beabstandet zum Druckelement (30) angeordneten zweiten Anschlag (32) begrenzt ist.

2. Stellventileinheit nach Anspruch 1, **dadurch gekennzeichnet, dass** das Druckelement (30) als ein Komprimierungsflansch ausgebildet ist.

3. Stellventileinheit nach Anspruch 1 oder 2, **dadurch gekennzeichnet, dass** die Vorspanneinrichtung (24) ein Gehäuse aufweist, das einen Stelldeckel (28) umfasst, der den ersten Anschlag (40) ausbildet und mit einem Stellkörper (26) verbunden ist, der den zweiten Anschlag (32) ausbildet.

4. Stellventileinheit nach Anspruch 3, **dadurch gekennzeichnet, dass** der Stellkörper (26) ein inneres Stellgewinde (34) aufweist, welches in einem montierten Zustand der Stellventileinheit (10) mit einem Außengewinde (36) des Ventilgehäuses (14) in Eingriff steht.

5. Stellventileinheit nach einem der Ansprüche 1 bis 4, **dadurch gekennzeichnet, dass** die Vorspanneinrichtung (24) mit einer Messeinrichtung (52) verbunden ist, die ein Messelement zur Detektion der axialen Lageveränderung der Druckhülse (20) umfasst.

6. Stellventileinheit nach Anspruch 5, **dadurch gekennzeichnet, dass** das Messelement als ein magnetempfindlicher Sensor (54) ausgebildet ist, der mit einem Magneten (46) zusammenwirkt, welcher mit der Druckhülse (20) verbunden ist.

7. Stellventileinheit nach Anspruch 6, **dadurch gekennzeichnet, dass** die Messeinrichtung (52) ein Sensorgehäuse (50) zur Anordnung des Sensors (54) aufweist, wobei das Sensorgehäuse (50) eine Führungsnut (48) ausbildet, in welcher der Magnet (46) axial beweglich geführt ist, und wobei der Magnet (46) über einen magnetisch leitenden Haftring (44) mit der Druckhülse (20) verbunden ist, der zumindest teilweise radial in die Führungsnut (48) eingreift.

8. Stellventileinheit nach Anspruch 7, **dadurch gekennzeichnet, dass** der Magnet (46) gegenüber dem Haftring (44) in Umfangsrichtung der Ventilstange (12) drehbar angeordnet ist.

9. Stellventileinheit nach einem der Ansprüche 5 bis 8, **dadurch gekennzeichnet, dass** das Messelement bidirektionell mit einer Kontrolleinheit kommuniziert, die mit einer Bedieneinheit (56) der Messeinrichtung (52) kommunizierend verbunden ist, wobei die Bedieneinheit (56) wenigstens eine Anzeigeeinheit sowie eine Kalibrierungstaste aufweist.

10. Stellventileinheit nach Anspruch 9, **dadurch gekennzeichnet, dass** die Kontrolleinheit über eine Kraft-Wegkennlinie des Federelements (22) eine Anpresskraft der Packung (16) detektiert.

11. Stellventileinheit nach Anspruch 9 oder 10, **dadurch gekennzeichnet, dass** die Kontrolleinheit mit wenigstens einem Aktor kommunizierend verbunden ist, der zum Nachstellen der Vorspannkraft mit dem Stellkörper (26) verbunden ist.

## Claims

1. Control valve unit (10) comprising a valve rod (12) which is sealed off from a valve housing (14) by means of a sealing arrangement, which sealing arrangement has a packing (16) that is mounted axially between a pressure sleeve (20) and a counter bearing (18) on the valve housing (14), wherein the pressure sleeve (20) is mounted so as to be axially movable relative to the valve housing (14) and transmits to the packing (16) a contact pressure applied to the pressure sleeve (20) by a spring element (22) via a pressure element (30), and wherein the spring element (22) is supported on a pretensioning means (24) the distance of which from the counterbearing (18) can be adjusted, thus allowing adjustment of the contact pressure of the spring element (22) acting on the pressure sleeve (20), wherein the spring element (22) is arranged axially between a first stop (40) and a second stop (32) of the pretensioning means (24), wherein, in a preassembled state of the pretensioning means (24), the spring element (22) rests against the first stop (40) and the second stop (32) under pretension, **characterized in that,** in an operating state of the control valve unit (10), the second stop (32) is arranged at a fixed distance from the first stop (40) in the direction of the counter bearing (18) and wherein the axial change in position of the pressure sleeve (20) is limited by the second stop (32) that is arranged at a distance from the pressure element (30) in the direction of the counter bearing (18).

2. Control valve unit according to claim 1, **characterized in that** the pressure element (30) is designed as a compression flange.

3. Control valve unit according to any one of claims 1 or 2 above, **characterized in that** the pretensioning means (24) has a housing which comprises an adjustable cover (28) that constitutes the first stop (40) and is connected to an adjusting member (26) that constitutes the second stop (32).

4. Control valve unit according to claim 3, **characterized in that** the adjusting member (26) has an internal adjusting thread (34) which, in an assembled state of the control valve unit (10), is in engagement with an external thread (36) of the valve housing (14).

5. Control valve unit according to any one of claims 1 to 4 above, **characterized in that** the pretensioning means (24) is connected to a measuring device (52) which comprises a measuring element for detecting the axial change in position of the pressure sleeve (20).

6. Control valve unit according to claim 5, **characterized in that** the measuring element is designed as a magnetically sensitive sensor (54) which interacts with a magnet (46) that is connected to the pressure sleeve (20).

7. Control valve unit according to claim 6, **characterized in that** the measuring device (52) has a sensor housing (50) for arranging the sensor (54), which sensor housing (50) has a guide groove (48) in which the magnet (46) is guided so as to be axially movable, and which magnet (46) is connected to the pressure sleeve (20) via a magnetically conductive fastening ring (44) at least part of which engages radially in the guide groove (48).

8. Control valve unit according to claim 7, **characterized in that** the magnet (46) is arranged so as to be rotatable relative to the fastening ring (44) in the circumferential direction of the valve rod (12).

9. Control valve unit according to any one of claims 5 to 8 above, **characterized in that** the measuring element communicates bidirectionally with a control unit which is connected in a communicating manner to an operating unit (56) of the measuring device (52), which operating unit (56) has at least one display unit and a calibration button.

10. Control valve unit according to claim 9, **characterized in that** the control unit detects a contact pressure of the packing (16) via a force-displacement characteristic of the spring element (22).

11. Control valve unit according to any one of claims 9 or 10 above, **characterized in that** the control unit is connected in a communicating manner to at least one actuator which is connected to the adjusting member (26) for adjusting the pretensioning force.

## Revendications

1. Unité de soupape de commande (10) comprenant une tige de soupape (12), qui est étanchéifiée par rapport à un carter de soupape (14) par l'intermédiaire d'un ensemble d'étanchéité, dans laquelle l'ensemble d'étanchéité présente une garniture d'étanchéité (16), qui est reçue axialement entre un manchon de pression (20) et un contre-palier (18) sur le carter de soupape (14), dans laquelle le manchon de pression (20) est monté mobile axialement par rapport au carter de soupape (14) et transmet sur la garniture d'étanchéité (16) une force d'application appliquée par un élément ressort (22) par l'intermédiaire d'un élément de pression (30) sur le manchon de pression (20), et dans laquelle l'élément ressort (22) s'appuie sur un dispositif de précontrainte (24), lequel peut être réglé à distance du contre-palier (18), ce qui a pour effet que la force d'application de l'élément ressort (22) agissant sur le manchon de pression (20) peut être réglée, dans laquelle l'élément ressort (22) est disposé axialement entre une première butée (40) et une deuxième butée (32) du dispositif de précontrainte (24), dans laquelle dans un état pré-assemblé du dispositif de précontrainte (24) l'élément ressort (22) s'appuie sous l'effet d'une précontrainte sur la première butée (40) ainsi que sur la deuxième butée (32), **caractérisée en ce que** dans un état de fonctionnement de l'unité de soupape de commande (10) la deuxième butée (32) est disposée en direction du contre-palier (18) à une distance fixe de la première butée (40) et dans laquelle la modification de position axiale du manchon de pression (20) est limitée par la deuxième butée (32) disposée à distance de l'élément de pression (30) en direction du contre-palier (18).

2. Unité de soupape de commande selon la revendication 1, **caractérisée en ce que** l'élément de pression (30) est réalisé sous la forme d'une bride de compression.

3. Unité de soupape de commande selon la revendication 1 ou 2, **caractérisée en ce que** le dispositif de précontrainte (24) présente un boîtier, qui comprend un couvercle de commande (28), qui réalise la première butée (40) et est relié à un corps de commande (26), qui réalise la deuxième butée (32).

4. Unité de soupape de commande selon la revendication 3, **caractérisée en ce que** le corps de commande (26) présente un organe de commande intérieur (34), lequel dans un état monté de l'unité de soupape de commande (10) est en prise avec un filetage mâle (36) du carter de soupape (14).

5. Unité de soupape de commande selon l'une quelconque des revendications 1 à 4, **caractérisée en ce que** le dispositif de précontrainte (24) est relié à un dispositif de mesure (52), qui comprend un élément de mesure pour la détection de la modification de position axiale du manchon de pression (20).

6. Unité de soupape de commande selon la revendication 5, **caractérisée en ce que** l'élément de mesure est réalisé sous la forme d'un capteur magnétosensible (54), qui coopère avec un aimant (46), lequel est relié au manchon de pression (20).

7. Unité de soupape de commande selon la revendication 6, **caractérisée en ce que** le dispositif de mesure (52) présente un boîtier de capteur (50) pour la disposition du capteur (54), dans laquelle le boîtier de capteur (50) réalise une rainure de guidage (48) dans laquelle l'aimant (46) est guidé mobile axialement, et dans laquelle l'aimant (46) est relié par l'intermédiaire d'une bague adhésive (44) magnétiquement conductrice au manchon de pression (20), qui s'insère au moins en partie radialement dans la rainure de guidage (48).

8. Unité de soupape de commande selon la revendication 7, **caractérisée en ce que** l'aimant (46) est disposé de manière rotative par rapport à la bague adhésive (44) dans la direction circonférentielle de la tige de soupape (12).

9. Unité de soupape de commande selon l'une quelconque des revendications 5 à 8, **caractérisée en ce que** l'élément de mesure communique de manière bidirectionelle avec une unité de contrôle, qui est reliée en communication à une unité de commande utilisateur (56) du dispositif de mesure (52), dans laquelle l'unité de commande utilisateur (56) présente au moins une unité d'affichage ainsi qu'une touche d'étalonnage.

10. Unité de soupape de commande selon la revendication 9, **caractérisée en ce que** l'unité de contrôle détecte par l'intermédiaire d'une courbe caractéristique force-trajet de l'élément ressort (22) une force d'application de la garniture d'étanchéité (16).

11. Unité de soupape de commande selon la revendication 9 ou 10, **caractérisée en ce que** l'unité de contrôle est reliée en communication à l'au moins un actionneur, qui est relié au corps de commande (26) pour le réglage de la force de précontrainte.
